# EUROPÄISCHE PATENTANMELDUNG

(11) **EP 1 300 776 A1**
(43) Veröffentlichungstag der Anmeldung: **09.04.2003**
(21) Anmeldenummer: 01123808.6
(22) Anmeldetag: 04.10.2001
(51) Int. Cl.: G06F 17/30

(54) **Kontextsensitives Verfahren zur Ermittlung von Daten aus Datenbanken**

(71) Anmelder: exorbyte GmbH, 78467 Konstanz (DE)
(72) Erfinder: Nieswand, Benno, 78467 Konstanz (DE); Ross, Edward, Clevedan, BS21 6JA (GB)
(74) Vertreter: Stürken, Joachim

(57) **Zusammenfassung**

Die Erfindung betrifft ein computerimplementiertes, kontextsensitives Verfahren zum Auffinden und Abrufen von Datenbankergebnissen aus beliebig strukturierten Datenbanken mit Datensätzen. Das Verfahren ist gekennzeichnet durch folgende Verfahrensschritte:
a) Eingabe oder Veränderung einer Zeichenkette (Z) in das aktuelle Eingabefeld (F1-F4);
b) Übergabe der Zeichenkette (Z) an einen Suchalgorithmus zum Durchsuchen der Datenbank;
c) Ausgeben des Suchergebnisses in identischer oder approximativer Näherung, in Form einer Kandidatenliste (KL), wobei unmittelbar nach Eingabe einer Zeichenkette (Z) in das Eingabefeld (F1-F4) eine Bereitstellung einer Kandidatenliste (KL) mit naheliegenden Kandidaten (K) für das aktuelle Eingabefeld (F1-F4) in einem Kandidatenfeld (KF) erfolgt und
d) Bereitstellung eine Vorschlagsliste (VL) für die Zeichenkette (Z) in einem Vorschlagsfeld (VF);
e) Bestimmung einer Kontexteinschränkung durch Auswahl, entweder im bereitgestellten Kandidatenfeld (KF) oder im bereitgestellten Vorschlagsfeld (VF) und anschließendes Auffüllen der Eingabefelder (F1-F4) mit entsprechenden Ergebnissen;
f) Ausgeben von Teil- oder Vollvorschlägen (V) innerhalb des Vorschlagfelds (VF) unter Nutzung aller Informationen der vorher erzielen Kandidatenliste (KL);
g) Wiederholen entweder einer der Schritte a-d, oder nur des Schrittes d oder nur des Schrittes e mit nachfolgendem Schritt f oder nur des Schrittes f.

## Beschreibung

### Technischer Grundgedanke

Die Erfindung betrifft ein computerimplementiertes, kontextsensitives Verfahren zum Auffinden und Abrufen von Datenbankergebnissen aus beliebig strukturierten Datenbanken mit Datensätzen.

### Definitionen von Begriffen

### Datenbank

Bei dem verwendeten Begriff Datenbank handelt es sich um eine beliebig strukturierte Ansammlung von Daten, die entsprechenden, adressierbaren Felder zugeordnet sind, wobei die Datenbank sowohl eine horizontale, als auch eine vertikale Struktur aufweist und ein Datensatz ausschließlich aus horizontal nebeneinander angeordneten Feldern besteht.

### Zeichenkette

Unter dem Begriff Zeichenkette ist eine Aneinanderreihung von Zeichen, beispielsweise Buchstaben oder Zahlen zu verstehen, die von dem Anwender in speziell dafür vorgesehene Eingabefelder, die mittels einer Eingabemaske auf einen Bildschirm darstellbar ist, einzugeben sind. Vorzugsweise sind mehrere Eingabefelder vorhanden, in die Zeichenketten eingegeben werden können, aber auch über eine Software ausgegeben werden können. Die Eingabefelder sind Substituten, wie beispielsweise Namen, Strasse, Ort, Bankleitzahl etc. zugeordnet. Das aktuelle Eingabefeld wird z.B. durch Anklicken bestimmt.

### Kandidatenfeld/Kandidatenliste

Unter dem Begriff Kandidatenfeld ist ein Feld in einer Eingabemaske auf den Bildschirm zu verstehen, in dem Kandidaten des aktuellen Eingabefelds dargestellt sind. Dies bedeutet, dass die in dem Kandidatenfeld dargestellten Daten einer vertikalen Darstellung einer Datenbank eines Datenbankfeldes entsprechen. Das heisst, dass nicht die Datensätze dargestellt sind, sondern jeweils ein Feld eines Datensatzes, das im Zusammenhang zu der Zeichenkette steht, die in einem derzeit gültigen und angewählten Eingabefeld einer eingegebenen Zeichenkette steht. In einer Kandidatenliste sind Kandidaten in einem Kandidatenfeld dargestellt.

### Vorschlagsfeld/Vorschlagsliste

In einem weiteren Feld, das Bestandteil der Darstellung auf dem Bildschirm ist, ist in einem sogenannten Vorschlagsfeld eine Vorschlagsliste dargestellt, die aus einer sequentiellen, untereinander angeordneten Reihe von Teilen mehreren Datensätzen besteht. Dies bedeutet, dass ein horizontaler Auszug einer Datenbank hier dargestellt ist, in dem zumindest ein Teil der Felder, die zu einem Datensatz gehören, dargestellt sind. Die Vorschlagsliste bildet sich somit aus mindestens einem Vorschlag, der als Teilergebnis oder bereits als Lösung für die Suchanfrage zu verstehen ist.

### Kontext

Unter Kontext ist eine Teilmenge der Datensätze zu verstehen, die vorzugsweise durch Zeichenketten in den Eingabefeldern definiert sind. Der Kontext wird dazu verwendet, die erstellte Kandidatenliste zu bewerten, z.B. mit einer entsprechend farbigen Markierung. Die Markierung zeigt an, ob die ausgewählten Kandidaten in der Kandidatenliste innerhalb, ausserhalb des Kontextes liegen oder noch nicht bestimmbar sind.

### Stand der Technik

Datenbankanwendungen sind zahlreich im Wirtschaftsleben vertreten. Aufgrund von geschäftlichen Transaktionen, Recherchen oder Ähnlichem ist es notwendig, in großen Datenbankbeständen nach entsprechenden Informationen zu recherchieren, beziehungsweise zu suchen. Hierfür werden Computerprogramme eingesetzt, die entsprechende Suchmöglichkeiten in Form eines Softwaretools anbieten. Die Funktion dieses Softwaremoduls besteht darin, die Datenbankbestände zu durchsuchen und hier entsprechende Ergebnisse bereitzustellen.

Das Durchsuchen großer Datenbanken erfolgt bislang in der Regel sequentiell. Der Anwender, beziehungsweise der Suchende stellt einen Suchauftrag in der Form, indem er beispielsweise Off-Line oder Online in einer definierten Suchsprache, zum Beispiel Messenger, ein Suchprofil erstellt. Alternativ hierzu ist vorgesehen, bestimmt Formulare auszufüllen, wie sie aus Suchmaschinen bekannt sind, indem Felder der Datenbank angegeben werden, in denen zu suchen ist. Zusätzlich können die Suchbegriffe untereinander oder bezüglich der Suchfelder in Verbindung gebracht werden, diese werden mit logischen Operatoren verknüpft. Dieser somit erstellte Suchauftrag wird in der Regel mittels eines Tastendrucks an das Programm übergehen, wobei das Programm dann die über Formular erstellte Suchanfrage in eine entsprechende Suchsprache umsetzt. Die so erstellte Suchanfrage wird an den Datenbankanbieter übergehen, der dann, aufgrund dieser Suchanfrage, diese Suchergebnis in Form einer Trefferliste bereitstellt. Diese Trefferliste wird vorzugsweise klassifiziert, indem angegeben wird, zutreffend, weniger zutreffend und gar nicht zutreffend. Diese Trefferliste kann dann ebenfalls vom Anwender beziehungsweise Suchenden Sequenzen durchsucht werden. Hierbei entscheidet der Anwender, ob der Treffer für ihn relevant ist oder nicht.

Ergibt sich zum Beispiel aus dem Ergebnis, dass die Suchanfrage noch nicht zu dem gewünschten Ergebnis geführt hat, hat der Anwender ein erneutes Suchprofil zu erstellen. Dabei besteht für ihn die Möglichkeit, auf den bisher erstellten Suchprofil aufzusetzen, indem er diese mit logischen Operatoren ergänzt oder es besteht für ihn die Möglichkeit, die Suchstrategie zu verwerfen und eine neue Suchstrategie entsprechend aufzubauen.

Für den Anwender besteht immer die Pflicht, dass das mittels einer Suchanfrage erhaltene Ergebnis nacheinander, das heisst sequentiell zu durchsuchen und hieraus entsprechende Schlüsse zu ziehen, um eine neue Suchstrategie aufbauen zu können. Mit diese Art und Weise kann zwar ein iteratives Suchergebnis erzielt werden, es ist jedoch für den Anwender sehr mühsam, da dieser zuerst ein Profil erstellen muss, in einem weiteren Schritt das Ergebnis, das aus diesem Profil erzielt wird, analysieren muss und in einem weiteren Schritt Lehren ziehen muss, die die Grundlage für die Erstellung eines neuen Rechercheprofils sind, um ein gewünschtes Ergebnis mit einem entsprechenden Erfolg zu erzielen.

Dies bedeutet, dass der Benutzer stets eine Suche vollständig durchlaufen muss, bevor er diese entsprechend optimieren kann. Dabei ist es die Regel, dass dieser, das so erstellte Suchprofil vollständig verwerfen muss und ein entsprechend neues aufbauen muss und diese Schritte von Anfang bis Ende bei jeder neuen Suche durchlaufen muss.

### Aufgabe der Erfindung

Die Aufgabe der Erfindung besteht darin, ein Verfahren der eingangs genannten Art, derart weiterzubilden, dass strukturiertes Suchen in Datenmengen beliebiger Größe effizient, komfortabel und interaktiv ausgeführt werden können.

### Lösung der Aufgabe

Die Lösung der Aufgabe besteht darin, ein Verfahren mit folgenden Merkmalen zu realisieren:
a) Eingabe oder Veränderung einer Zeichenkette in das aktuelle Eingabefeld;
b) Übergabe der Zeichenkette an einen Suchalgorithmus zum Durchsuchen der Datenbank;
c) Ausgeben des Suchergebnisses in identischer oder approximativer Näherung, in Form einer Kandidatenliste, wobei unmittelbar nach Eingabe einer Zeichenkette in das Eingabefeld eine Bereitstellung einer Kandidatenliste mit naheliegenden Kandidaten für das aktuelle Eingabefeld in einem Kandidatenfeld erfolgt und
d) Bereitstellung eine Vorschlagsliste für die Zeichenkette in einem Vorschlagsfeld;
e) Bestimmung einer Kontexteinschränkung durch Auswahl, entweder im bereitgestellten Kandidatenfeld oder im bereitgestellten Vorschlagsfeld und anschließendes Auffüllen der Eingabefelder mit entsprechenden Ergebnissen;
f) Ausgeben von Teil- oder Vollvorschlägen innerhalb des Vorschlagfelds unter Nutzung aller Informationen der vorher erzielen Kandidatenliste;
g) Wiederholen entweder einer der Schritte a-d, oder nur des Schrittes d oder nur des Schrittes e mit nachfolgendem Schritt f oder nur des Schrittes f.

Der Grundgedanke der Erfindung besteht darin, dass der Anwender innerhalb eines selbstgewählten Kontextes suchen kann, den er jederzeit verändern kann, dabei aber immer die Möglichkeit hat gezielt über den Kontext hinweg schauen zu können. Dies ermöglicht eine sowohl horizontal, als auch vertikale Durchsuchung der Datenbank.

### Vorteile der Erfindung

Einer der wesentlichen Vorteile der Erfindung besteht darin, dass dem Anwender dieses erfindungsgemässen Verfahrens keine Strategie zur sukzessiven Einschränkung seines zu durchsuchenden Bereichs einer Datenbank aufgezwungen wird. Er ist frei in seiner Wahl entsprechende Eingabefelder auszufüllen, aus Kandidatenlisten auszuwählen oder bereits Vorschlagslisten anzunehmen und diese dann durch ein weiteres hinzufügen von Zeichenketten in Eingabefeldern zu ergänzen. Das Verfahren unterstützt durch ständiges Aktualisieren der erhaltenen Daten bestmöglich und führt schnell und effizient zum richtigen Datensatz.

Ein weiterer wesentlicher Vorteil des erfindungsgemäßen Verfahrens besteht darin, dass jede Eingabe, die von dem Anwender vorgenommen wird, gespeichert wird, so dass eine Rückverfolgung der durchgeführten Suchreihenfolge jederzeit möglich ist. Dabei steht ihm bei jedem Suchschritt frei, jedes beliebige Eingabefeld als aktuelles Eingabefeld zu definierten und dann entsprechend eine neue Suche aufzubauen und die Suche dann fortzuführen.

Durch gleichzeitiges horizontales und vertikales Suchen von strukturierten Datenbanken ermöglicht das erfindungsgemässe Verfahren dem Anwender schnell und sehr effizient und auch bei sehr großen Datenmengen ohne exakte Vorgabe der zu suchenden Zeichenkette den gewünschten Datensatz zu ermitteln.

Zusätzliche Eingabefelder erlauben es, auf sehr einfache Art und Weise den approximativen Grad zu bestimmen, mit dem Kandidatenlisten, die auf das aktuelle Eingabefeld bezogen sind, darzustellen sind.

Zusätzliche Merkmale geben in dem Vorschlagsfeld oder auch Kandidatenfeld die Qualität, beispielsweise 100 % Treffer, der ermittelten Ergebnisliste an.

Das Verfahren selbst vorzugsweise in Form einer Software realisiert, wobei diese vorzugsweise aus einer Anwenderschnittstelle, nämlich einer Clients, der als Dateneingabeoberfläche ausgebildet ist und einem Datenserver (Server) besteht, die entweder direkt oder über entfernte Kommunikationskanäle, beispielsweise dem Internet, miteinander verbunden sind.

Dadurch ist es möglich, dass auch Zwischenergebnisse auf dem Server gespeichert werden und so jederzeit wieder aufgerufen werden können.

Vorzugsweise sind solche Mechanismen vorgesehen, die bei Eingabe einer Zeichenkette bereits nach den ersten Zeichen Kandidaten unterbreiten, wie die Zeichenkette zu vervollständigen ist.

Weitere vorteilhafte Hilfsmittel können dafür vorgesehen werden, um Kandidatenund/oder Vorschlagslisten zu bewerten, in dem diese farbig gekennzeichnet sind, so dass der Benutzer unmittelbar erkennen kann, welche Ergebnisse beispielsweise kontextkompatibel, nicht kontextkompatibel oder aufgrund der Fragetechnik noch nicht entscheidbar sind, ob sie kontextkompatibel oder nicht kontextkompatibel sind.

Auch die Eingabefelder weisen vorzugsweise entsprechende Indikatoren auf, wobei vorteilhafterweise vorgesehen ist, dass beispielsweise ein schwarzer Indikator kennzeichnet, dass das Eingabefeld als Kontext definiert ist, durch Grün gekennzeichnet wird, dass mindestens ein Vorschlag der in der Kandidatenliste oder in der Vorschlagsliste dargestellt ist, zum Kontext paßt, und beispielsweise durch die Farbe orange solche Treffer gekennzeichnet werden, die zwar ermittelt worden sind, jedoch nicht zum Kontext passen. Durch beispielsweise die Farbe rot wird gekennzeichnet, dass kein Treffer ermittelt werden konnte.

Vorzugsweise ist es nicht notwendig, dass der Benutzer durch Eingabe einer Bestätigung oder durch Drucken eines bestimmten Schaltelements die Suche bzw. Suchstrategie ausführen muss. Jede Eingabe in eines der entsprechenden Felder löst unmittelbar eine Suche aus, so dass der Benutzer stets einen Überblick hat, welche Eingabe zu welchen Ergebnis führt. Nur dies allein bietet ihm die Möglichkeit, interaktiv zu dem entsprechenden Ergebnis zu gelangen.

Weitere vorteilhaftere Ausgestaltungen gehen aus den nachfolgenden Beschreibungen, den Zeichnungen, sowie den Ansprüchen hervor.

### Zeichnungen

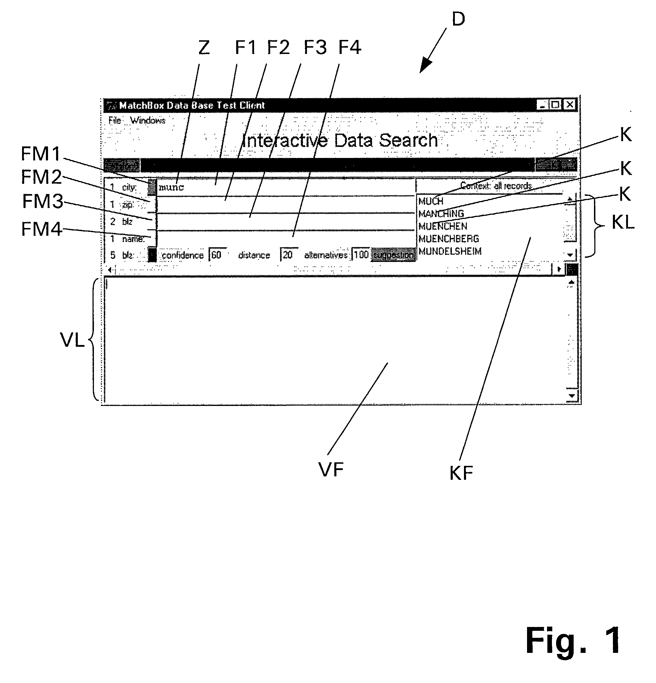

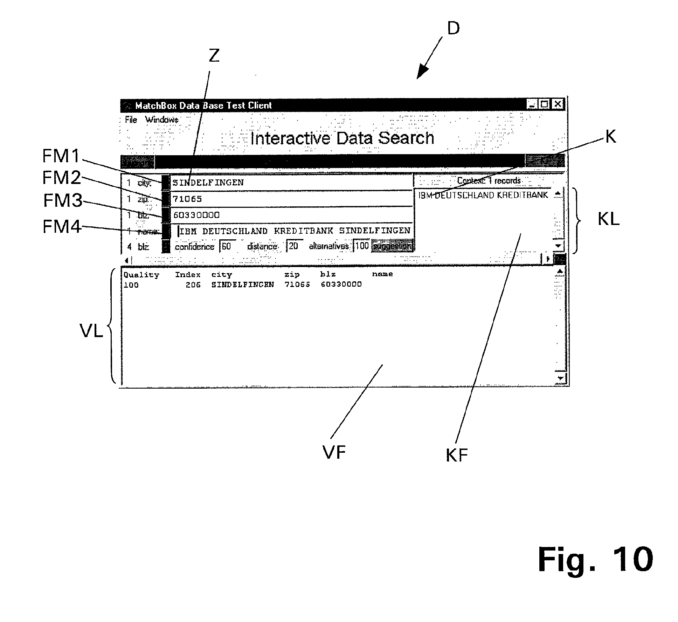

Die Fig. 1-10 zeigen unterschiedliche Verfahrensschritte, die bei der interaktiven Datensuche mittels des erfinderischen Verfahrens durchlaufen werden.

### Beschreibung eines Ausführungsbeispiels

In Fig. 1 ist ein Datenein- und -ausgabemaske D eines Clients dargestellt.

Die Felder F1, F2, F3 und F4, die als Eingabe- und als Ausgabefelder ausgebildet sind, sind nach der Initialisierung des Clients leer. Die Felder F1-F4 sind im vorliegenden Ausführungsbeispiel entsprechenden Begriffen zugeordnet, beispielsweise Stadt (CITY), Postleitzahl (ZIP), Bankleitzahl (BLZ) und Name (NAME).

Durch Eingabe beispielsweise einer Zeichenkette Z mit den Buchstaben "MUNC" in Feld F1 (CITY) löst der Anwender bereits eine erste Abfrage aus. Hierzu werden Kandidaten K in einem in der Datenein- und -ausgabemaske D vorgesehenes Kandidatenfeld in einer Kandidatenliste KL dargestellt, die zumindest approximativ der eingegebenen Zeichenkette Z entsprechen.

Sofern in der Kandidatenliste KL Kandidaten K vorhanden sind, verändert sich ein den jeweiligen Feldern F1-F4 zugeordnetes Feldzustandsmerkmal FM1-FM4.

In Fig. 1 zeigt das Feldzustandsmerkmal FM1 an, dass mindestens ein Kandidat K aus der Kandidatenliste KL zutrifft.

Das weitere in der Datenein- und -ausgabemaske D vorgesehene Vorschlagsfeld V bleibt leer, da aus der Kandidatenliste KL noch keine entsprechender Kontext ausgewählt worden ist.

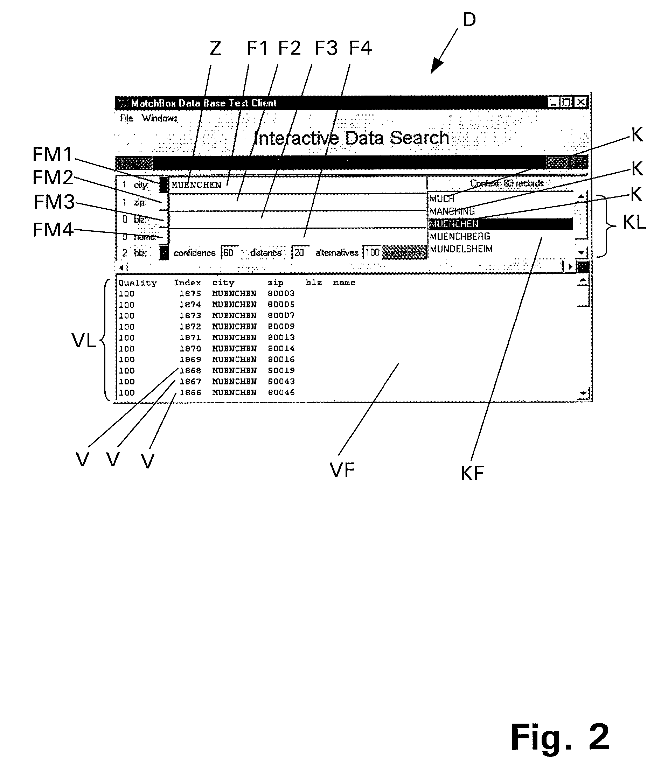

In Fig. 2 wird von dem Anwender der Kontext aus der Kandidatenliste KL ausgewählt, indem der auf der Kandidatenliste KL aufgeführte Zeichenkette angeklickt wird. Durch Anklicken wird die unterlegte Zeichenkette in den in Fig. 2 dargestellten Ausführungsbeispiel Feld F1 übertragen und das entsprechende Feldzustandsmerkmal FM1 verändert sich in den Bereich kontextkompatibel. Dadurch wird auch das entsprechende Vorschlagsfeld mit Vorschlagsliste VL bestehend aus Vorschlägen V ausgefüllt, und als Teilergebnis dargestellt.

Im vorliegenden Fall ist aus der Kandidatenliste KL die Zeichenkette "MUENCHEN" ausgewählt worden und in Feld F1 übertragen worden. Dadurch, nachdem die Datenbank aufgrund der dargestellten Kandidatenliste vertikal durchsucht und ein entsprechender Kontext ausgewählt worden ist, wird passend zu dem ausgewählten Kontext die zu durchsuchende Datenbank in horizontaler Ausrichtung in der Vorschlagsliste VL mit einzelnen Vorschlägen V dargestellt. Hier im vorliegenden Beispiel werden alle Postleitzahlen der Stadt München aufgelistet.

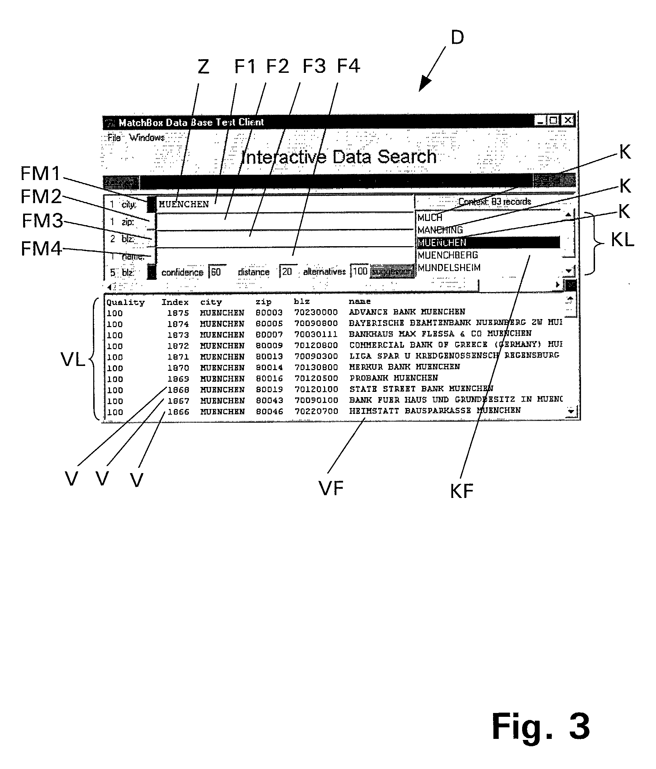

In einem weiteren Schritt, wie er in Fig. 3 dargestellt ist, wird die Vorschlagsliste VL ergänzt, indem alle Namen passend zu den entsprechenden Postleitzahlen und Bankleitzahlen angegeben werden. Damit ist eine vollständige Darstellung der horizontalen Ausrichtung der Datenbank zu dem Kandidaten "MUENCHEN" nun dargestellt.

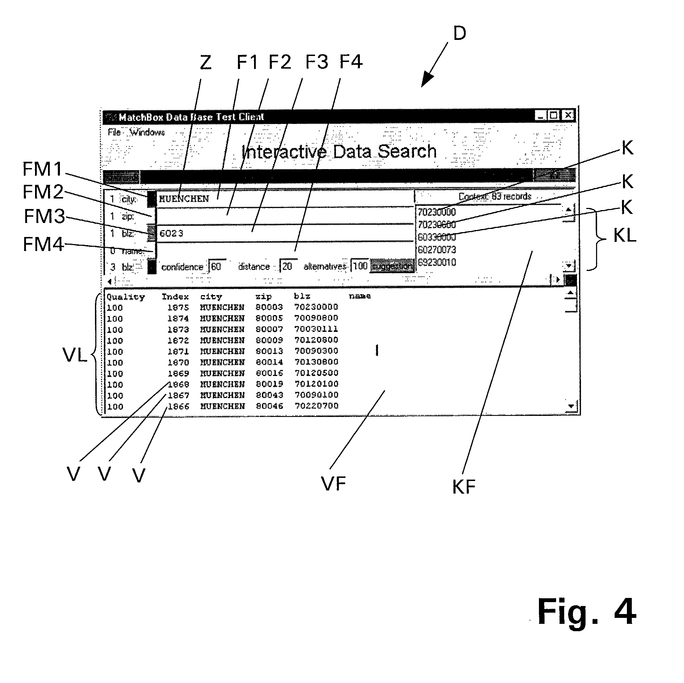

In einem weiteren Schritt entscheidet nun der Benutzer, in Feld 3, so wie es in Fig. 4 dargestellt ist, eine Bankleitzahl einzugeben. Entsprechend dem zu den in Fig. 1 und 2 dargestellten erfinderischen Vorgehen, wird die bisher dargestellte Kandidatenliste KL gelöscht und eine neue Kandidatenliste KL zu Feld 3 dargestellt. Auch hier werden in approximativer Näherung die entsprechenden Kandidaten K aufgeführt und das Feldindikatormerkmal FM des aktuellen Eingabefelds F wird entsprechend eingestellt. Im vorliegenden Fall erhält das Feldindikatormerkmal die Farbe grün, was gleichbedeutend damit ist, dass viele Kandidaten K ermittelt worden sind, und diese zu dem Kontext, der hier im vorliegenden Fall mit dem Begriff München definiert ist, passen.

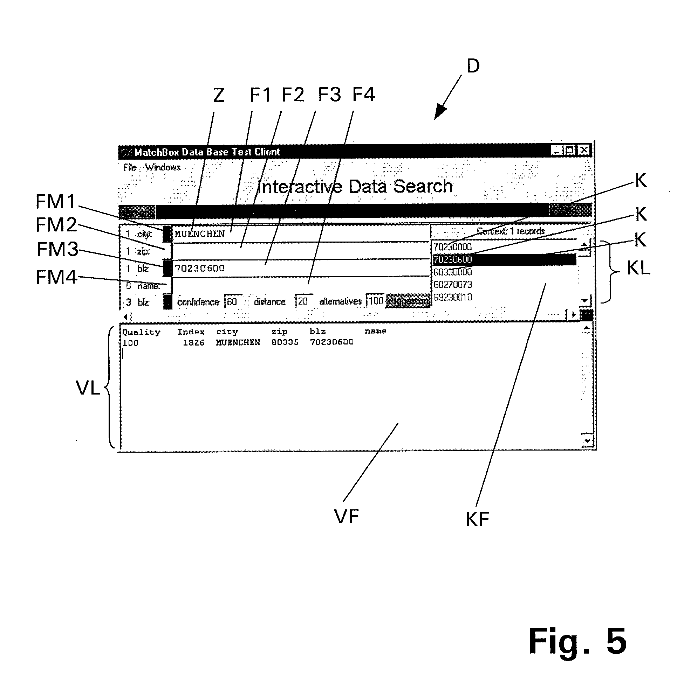

Wählt der Anwender, so wie es in Fig. 5 dargestellt ist, aus der Kandidatenliste KL einen entsprechenden Kandidaten K, so erhält der in der Vorschlagsliste VL die entsprechenden Vorschläge V. Im vorliegenden Fall ist dies ausschließlich ein Treffer der sowohl mit Bankleitzahl, als auch mit der Stadt übereinstimmt.

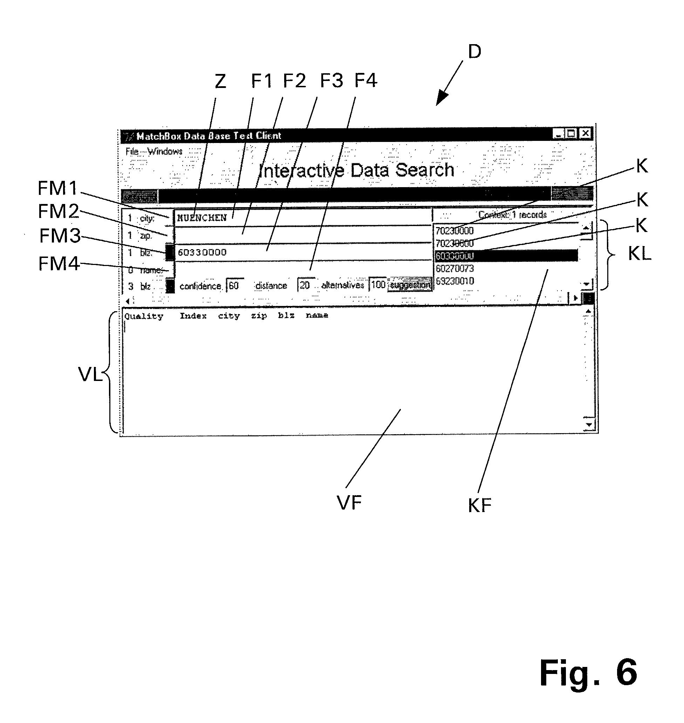

Wählt der Anwender aus der Kandidatenliste KL eine andere Bankleitzahl aus, so wie es in Fig. 6 dargestellt ist, so bestimmt er damit einen neuen Kontext, so dass das Feldindikatormerkmal FM3 entsprechend anders dargestellt wird. Im vorliegenden Fall ist ein sogenannter "broken-context" entstanden. Dies bedeutet, dass zu den Eingaben gemäß Feld F1 und F3 keine Vorschlagsliste VL mit entsprechenden Vorschlägen V erstellt werden kann.

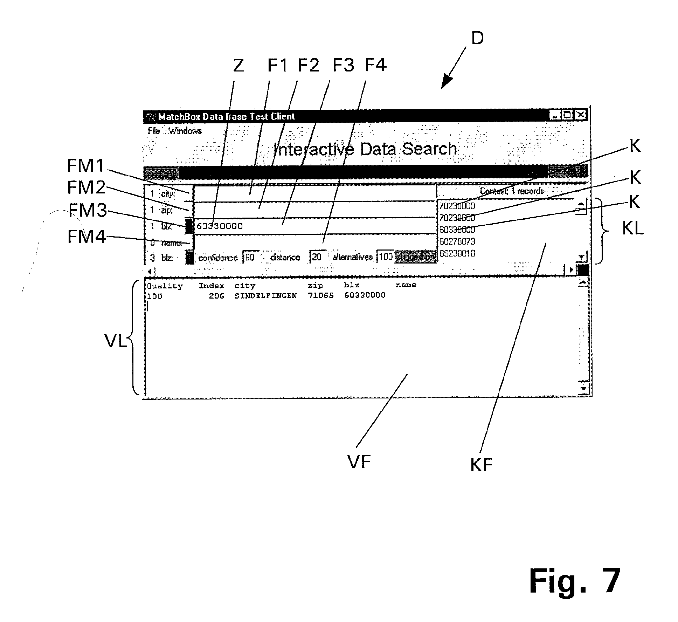

Definiert der Anwender einen neuen Kontext und löscht dabei die übrigen Feldeingaben, so wie es in Fig. 7 dargestellt ist, so erhält er wiederum eine Kandidatenliste KL, aus dem er den entsprechenden Kandidaten K ermittelt.

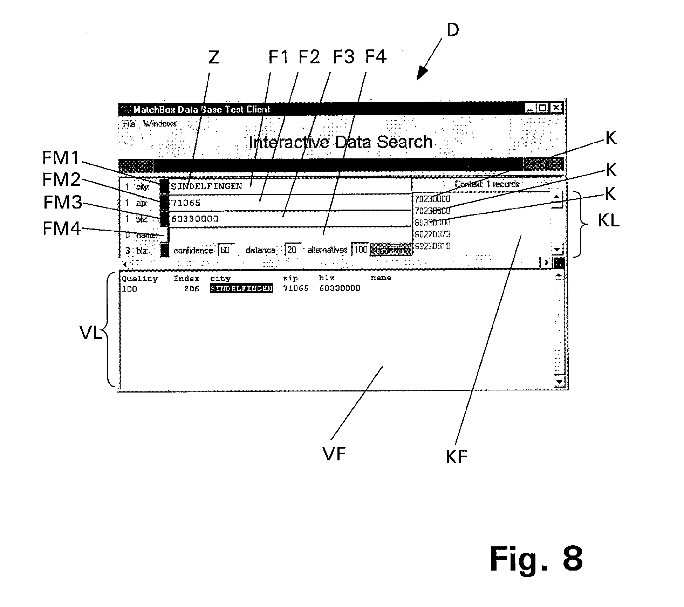

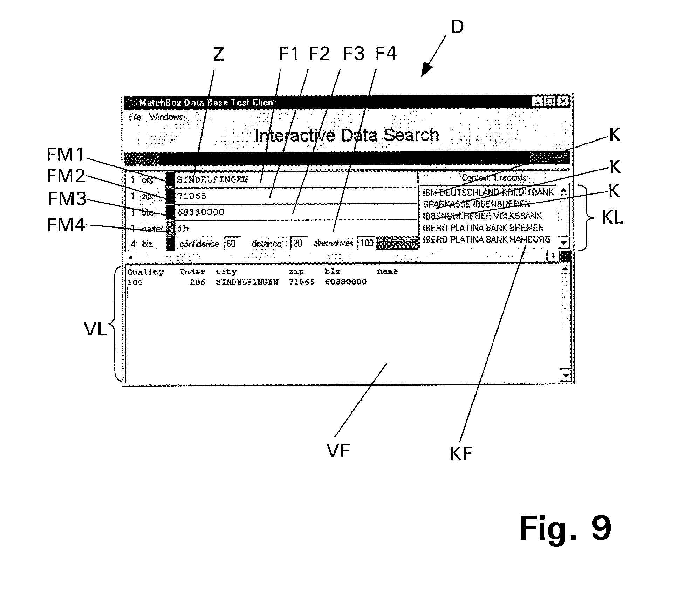

Wie es in Fig. 8 dargestellt ist, steht es nun dem Benutzer auch frei aus der Vorschlagsliste VL, wie sie in Fig. 7 dargestellt ist, entsprechend auszuwählen. Im vorliegendem Fall wird von ihm der Begriff Stadt (CITY) (entsprechend "Sindelfingen") dargestellt und die einzelnen Felder F1-F3 werden mit den horizontal dargestellten Ergebnissen gemäß der Vorschlagsliste VL aufgefüllt. Damit wird der Kontext für die Felder F1, F2 und F3 bestimmt. Ausschließlich Feld F4 (NAME) ist von dem Benutzer noch nicht ausgefüllt und gemäß Fig. 9 wird von dem Anwender hier eine entsprechende Vorgabe erwartet. Wird keine Vorgabe angegeben, so besteht auch die Möglichkeit durch einfaches Anklicken des Feldes F4 eine entsprechende Vorschlagsliste VL mit allen Namen erstellen zu lassen.

Gemäß Fig. 9 wird jedoch der Weg beschritten, in Feld F4 bereits einen Teil einer Zeichenkette Z einzugeben. Auch hier wird, wie in Fig. 1 bereits dargestellt, die Kandidatenliste KL bezüglich Feld F4 (aktuelles Feld) erstellt. Dem Anwender steht es nun frei, aus der Kandidatenliste KL einen entsprechenden Kandidaten K auszuwählen. Im vorliegenden Fall ist der Kandidat K die Zeichenkette "IBM Deutschland Kreditbank". Das entsprechende Feldzustandsmerkmal FM4 zeigt durch eine farbige Darstellung, dass auch hier ein kontextkompatibler Kandidat K ausgewählt worden ist. Sobald alle entsprechenden Felder mit dem entsprechenden Feldkontextmerkmal versehen sind, ist der in der Vorschlagsliste VL und jetzt damit Ergebnisliste dargestellte Treffer ermittelt worden.

Zusätzlich können durch Sektionsschalter S Darstellungsarten insbesondere in Bezug zur Vorschlagsliste VL (beispielsweise Darstellung ausschliesslich nur BLZ) ausgewählt werden.

Die Struktur einer Datenbanksuche gemäß dem vorliegenden Verfahren zeichnet sich dadurch aus, dass bei dem Start einer neuen Datensuche auf dem Server einer Datenstruktur initialisiert wird, die den gesamten Suchvorgang und alle relevanten Zwischenergebnisse speichert und für eine Weiterverarbeitung bereithält. Der Client erhält einen sogenannten Kennzeichner der initialisierten Sitzung, der bei allen folgenden Anfragen angegeben werden muss. Durch Verwendung von Sicherheitsmechanismen (Public- und Privatkeys) kann dadurch erreicht werden, dass nur der initialisierende Client Zugriff auf die aktuellen Daten der jeweiligen Sitzung hat.

Anfragen an den Server (Eingaben in die entsprechenden Felder F1-F4) verändern den Inhalt dieser Struktur. Gleichzeitig sendet der Server eine Teilmenge der Informationen zurück an den anfragenden Client (Auffüllen der Kandidatenliste KL und der Vorschlagsliste VL).

Es wird soviel Informationen über die Anfrage in einer Historienstruktur gespeichert wie nötig ist, um die Zwischenergebnisse zu reproduzieren, jedoch nicht unbedingt alle Ergebnisse selbst. Die Datenstruktur zum Halten der Zwischenstände der Suche kann jederzeit vom Client gelöscht werden. Eine Historienstruktur speichert zumindest jede Änderung einer Eingabezeichenkette, jeden Modus, jede Teilanfrage, jede Selektion in einer Liste. Durch Traversieren dieser ist es jederzeit möglich, jedes Teilergebnis zu reproduzieren und damit auch jeden Zustand des Kontextes zu wiederholen. Dem Anwender wird ein Rückwärts- und Vorwärtslaufen innerhalb dieser Historie damit möglich und erlaubt.

Das erfindungsgemäße Verfahren eignet sich für jede Art von Datenbankstruktur und wird sich überall an den Stellen auszeichnen, an denen ein Suchen nach herkömmlich bekannter Methode (sequentiell) nur sehr mühsam ist. Dabei sind folgende Anwendungsbereiche vorgesehen, die jedoch hier nicht abschließend aufgezählt sind und damit auch nicht schutzeinschränkend zu verstehen sind:

Datenbankqualitätsmanagement und Call-Center-Applikationen, insbesondere Adressdaten, Kontaktinformationen, Registrierungsdatenbanken, Kundenlisten, wobei typische Felder Städte und Stadtteile, Straßen, Firmennamen und Hausnummern sind.

Ferner sind Anwendungen im Bereich Büchereianwendung und -recherche (Autorenliste, Kategoriesuche, Stichwortsuche), Lagerhaltung und Logistik, Warenfluß, Postautomatisierung (Videoarbeitsplätze), Telekommunikationsauskunft, eCommerce, Data Warehousing, Webkataloge, Dokumentenverwaltungsysteme, Archivierung, Betriebssysteme und File Search vorgesehen.

### BEZUGSZEICHENLISTE

- D: Datenein- und -ausgabemaske
- Z: Zeichenkette
- F1-F4: Eingabefeld
- FM: Feldzustandsmerkmal

- K: Kandidat
- KL: Kandidatenliste
- KF: Kandidatenfeld

- V: Vorschlag
- VL: Vorschlagsliste
- VF: Vorschlagsfeld

## Patentansprüche

1. Computerimplementiertes, kontextsensitives Verfahren zum Auffinden und Abrufen von Datenbankergebnissen aus beliebig strukturierten Datenbanken mit Datensätzen, wobei das Verfahren durch folgende Verfahrensschritte kennzeichnet ist:
a) Eingabe oder Veränderung einer Zeichenkette (Z) in das aktuelle Eingabefeld (F1-F4);
b) Übergabe der Zeichenkette (Z) an einen Suchalgorithmus zum Durchsuchen der Datenbank;
c) Ausgeben des Suchergebnisses in identischer oder approximativer Näherung, in Form einer Kandidatenliste (KL), wobei unmittelbar nach Eingabe einer Zeichenkette (Z) in das Eingabefeld (F1-F4) eine Bereitstellung einer Kandidatenliste (KL) mit naheliegenden Kandidaten (K) für das aktuelle Eingabefeld (F1-F4) in einem Kandidatenfeld (KF) erfolgt und
d) Bereitstellung eine Vorschlagsliste (VL) für die Zeichenkette (Z) in einem Vorschlagsfeld (VF);
e) Bestimmung einer Kontexteinschränkung durch Auswahl, entweder im bereitgestellten Kandidatenfeld (KF) oder im bereitgestellten Vorschlagsfeld (VF) und anschließendes Auffüllen der Eingabefelder (F1-F4) mit entsprechenden Ergebnissen;
f) Ausgeben von Teil- oder Vollvorschlägen (V) innerhalb des Vorschlagfelds (VF) unter Nutzung aller Informationen der vorher erzielen Kandidatenliste (KL);
g) Wiederholen entweder einer der Schritte a-d, oder nur des Schrittes d oder nur des Schrittes e mit nachfolgendem Schritt f oder nur des Schrittes f.

2. Verfahren nach Anspruch 1, **dadurch gekennzeichnet, dass** die Darstellung der Kandidatenliste (KL) in Abhängigkeit von kontextkompatibel, nicht kontextkompatibel und nicht entscheidbar markiert sind.

3. Verfahren nach mindestens einem der vorhergehenden Ansprüche, **dadurch gekennzeichnet, dass** die Vorschlagsliste (VL) in Abhängigkeit von kontextkompatibel, nicht kontextkompatibel und nicht entscheidbar markiert ist.

4. Verfahren nach mindesten einem der vorhergehenden Ansprüche, **dadurch gekennzeichnet, dass** eine freie Wahl der Verknüpfung der Eingabefelder (F1-F4) beziehungsweise deren Kandidaten (K) vorgesehen ist.

5. Verfahren nach mindestens einem der vorhergehenden Ansprüche, **dadurch gekennzeichnet, dass** das Verfahren auf dem Client-Server-Prinzip basiert.

6. Verwendung eines computerimplementiertes, kontextsensitives Verfahren zum Auffinden und Abrufen von Datenbankergebnissen aus beliebig strukturierten Datenbanken mit Datensätzen als Suchmaschine gemäss Anspruch 1 für Datenbestände, die Adressen und/oder Telefonnummern umfassen.

7. Verwendung eines computerimplementiertes, kontextsensitives Verfahren zum Auffinden und Abrufen von Datenbankergebnissen aus beliebig strukturierten Datenbanken mit Datensätzen als Suchmaschine gemäss Anspruch 1 für Datenbestände im Internet oder Intranet.

8. Verwendung eines computerimplementiertes, kontextsensitives Verfahren zum Auffinden und Abrufen von Datenbankergebnissen aus beliebig strukturierten Datenbanken mit Datensätzen als Suchmaschine gemäss Anspruch 1 für die File-Suche auf Datenspeichern.
